# EUROPÄISCHE PATENTSCHRIFT

(11) **EP 1 081 070 B1**
(45) Veröffentlichungstag und Bekanntmachung des Hinweises auf die Patenterteilung: **31.03.2004**
(21) Anmeldenummer: 00117883.9
(22) Anmeldetag: 19.08.2000
(51) Int. Cl.: B65G 67/20

(54) **Modular koppelbarer Ladeboden**
Modular coupleable loading platform
Plateau de chargement ancrable modulaire

(30) Priorität: 28.08.1999 DE 19940956; 20.09.1999 DE 19944941
(43) Veröffentlichungstag der Anmeldung: 07.03.2001
(73) Patentinhaber: USM, Uebach Spezial Maschinen GmbH, 57572 Niederfischbach (DE)
(72) Erfinder: Hopf, Ernst-Roland, 83308 Trostberg (DE); Uebach, Eckhard, 57258 Freudenberg-Heisberg (DE); Krämer, Walter M., 67149 Meckenheim (DE); Hellmann, Günter, 57080 Siegen-Eisern (DE)
(74) Vertreter: Zellentin, Wiger, Dipl.-Ing.

(56) Entgegenhaltungen:
- WO-A-99/39985
- WO-A-99/40002
- CA-A- 1 187 526
- US-A- 5 082 415
- US-A- 5 496 013

## Beschreibung

Die vorliegende Erfindung betrifft einen modular koppelbaren Ladeboden für die Logistik, insbesondere des LKW-Gütertransportes, aber auch für andere Transportmittel wie Eisenbahn, Schiff und Flugzeug. Herkömmlich wird z.B. auf Paletten befindliches Ladegut mit Hilfe von Gabelstaplern (Ameisen) zunächst über die Rampe von Lagerhallen in die Lagerräume der LKWs hineingefahren und dort abgesetzt. Dies setzt eine zeitlich aufwendige Handhabung voraus.

Die EP 0 103 999 schlägt daher vor, in die Ladefläche des LKW Schienen einzulassen und in diesen Skates anzuordnen, z.B. gemäß EP 0 103 999 oder der eigenen älteren unveröffentlichten Anmeldung DE 199 40 956.0, die auf den Schienen laufende Rollen aufweisen. Die Skates sind mit Hilfe von Druckluft anhebbar, so daß die Last wahlweise auf den Boden abgesenkt oder von diesem abgehoben werden kann, um diese auf den Schienen zu bewegen. Damit ist zwar ein leichtes Verschieben der Last auf der Ladefläche möglich, zur oder von der Rampe sind die Lasten jedoch nach wie vor mit Hebezeugen zu bewegen. Weiterhin ist nachteilig, daß die Umrüstung der LKWs große Kosten verursacht und die Schienen mit den Skates auch dann im LKW verbleiben müssen, wenn sie nicht gebraucht werden.

Als Beispiel wird auch auf die Dokumente WO-A-99/40002 und CA-A-1.187.526 hingewiesen.

Die vorliegende Erfindung hat sich daher die Aufgabe gestellt, ein Transportsystem für Transportmittel und Lagerhallen zu schaffen, das bedarfsweise eingesetzt werden kann, d.h. bei Nichtgebrauch anderweitig verwendbar ist, das wesentlich kostengünstiger eingesetzt werden kann und welches sowohl im LKW als auch auf der Laderampe und in den Lagerhallen eine Frachtverschiebung ermöglicht, ohne diese mit Hilfe von Gabelstaplern anheben zu müssen. Das Transportsystem soll hinsichtlich der Nachrüstbarkeit keine Probleme machen und im Leichtbau herstellbar sein.

Dabei soll die Last auf Skates bewegt werden können, diese sollen aber eine ohne Hilfsmittel nicht in Einzelteile trennbare Einheit bilden, so daß die Skates als Ganzes gehandhabt, insbesondere bei Nichtgebrauch und erneuter Verwendung unkompliziert und damit effektiv umgesetzt werden können.

Die Lösung dieser Aufgabe gelingt mit einem einen modular koppelbaren Ladeboden und Skates aufweisenden Transportsystem gemäß Hauptanspruch. Vorteilhafte Ausgestaltungen dieses Systems finden sich in den Unteransprüchen.

Der Skate läuft vorliegend in einer eine Vertiefung aufweisenden Schiene der Rahmenkonstruktion und besitzt einen lastaufnehmenden Träger mit Rollen, wobei der Träger mit Hilfe des mit Druckluft beaufschlagbaren Schlauches anhebbar und absenkbar ist. Die Schiene ist vorzugsweise ein Hutprofil mit nach außen gerichteten Seitenflanken und einer Bodenfläche. Der Träger besteht aus einem ersten nach unten offenem U-Profil mit einer Auflagefläche sowie Seitenschenkeln, zwischen denen die Rollen gelagert sind. An die Seitenschenkel sind nach außen weisende Anschläge angeformt, auf der Auflagefläche ruht der Schlauch, wobei dieser von einem zweiten U-Profil als Tragschiene umgeben ist, die eine obere Tragfläche mit Seitenflächen aufweist, und deren Seitenflächen untere, die Anschläge der Seitenschenkel des ersten U-Profils untergreifende Einziehungen aufweisen und an diesen im aufgeblasenem Zustand des Schlauches anliegen.

Unter Rahmenkonstruktion soll dabei jede Möglichkeit einer beweglichen Basis verstanden werden, auf oder in welcher Schienen angeordnet werden können, die als Lauffläche für Skates dienen.

Diese Rahmen sind hinsichtlich ihrer Breite an die zu beladenden Transportmittel, z.B. eines sogenannten Trailers angepaßt und in ihrer Länge und ggf. Breite derart unterteilt, daß diese von einer Person bewegt, d.h. für den Nichtgebrauch z.B. hochgeklappt werden können. Diese Böden können auch in den Lagerhallen und auf den Rampen verlegt werden, so daß komplette Strecken entstehen, auf denen die Lasten ohne Hebezeug verschoben werden können. Der Übergang von der Ladefläche auf die Rampe erfolgt dabei niveaugleich, ggf. sind LKW-Rädern Keile unterzulegen. Die seitliche Ausrichtung des LKW kann über Konuszapfen erfolgen, wobei im LKW-Heck oder an der Rampe eine entsprechende Bohrung oder vice versa der Zapfen vorgesehen sind. Bei geeigneter Auslegung läßt sich damit auch die Höhe der Ladefläche aus der Federung des LKW (oder in diese hinein) korrigieren.

Von besonderem Vorteil ist bei der vorliegenden Lösung, daß das Transportsystem völlig frei gehandhabt werden kann, d.h. keinerlei Umrüstungen erfordert, und bedarfsweise entfernt und anderweitig eingesetzt werden kann. Zum Zusammenschließen der Einzelelemente dienen dabei die endseitig vorzugsweise an den Außenkanten angeordneten Verriegelungen.

Weiterhin können die Böden ineinandergreifende Steckkontakte aufweisen, um elektrische Anschlüsse herzustellen, ebenso können Steckkontaktkupplungen für einen Druckluftanschluß vorgesehen sein, um, wie eingangs beschrieben, die Skates über Druckluftschläuche anzuheben und ggf. auch abzusenken. Zusätzlich kann natürlich der Boden auch seitlich derartige Steckverbinder aufweisen, um etwa die Böden auch mit solchen verwenden zu können, die endseitige Anschlüsse nicht aufweisen.

Die Böden sind dabei vorzugsweise als Leichtbaukonstruktion ausgeführt, insbesondere besteht diese aus Aluminium oder Kunststoff und besonders bevorzugt weist diese eine Oberhaut und eine Unterhaut auf, die beidseitig eine Zellstruktur aus geeignetem Material, wie z.B. auch Kunststoff, kaschiert.

Bei Nichtgebrauch können die Böden wie gesagt hochgeklappt und an den Seitenwänden eines Transportfahrzeuges befestigt werden, wozu die Böden an den Seitenkanten geeignete Mittel wie z.B. Ösen aufweisen.

Weiterhin wird vorgeschlagen, die Böden neigbar auszubilden, um Lasten auch unter Schwerkraft abrollen zu lassen.

Erfindungsgemäß ruht die Last (Palette) nach dem Entleeren des Schlauches nicht auf einem Boden wie z.B. der Ladefläche eines LKW, sondern auf den (verbreiterten) Oberkanten der Schiene. Die Skates können vollständig unter dem Gut herausgezogen werden, so daß die gesamte Einheit aus Träger, Rollen, Schlauch und U-Profil übernommen werden kann und für einen anderweitigen Gebrauch zur Verfügung steht. Im Transportfahrzeug verbleibt somit lediglich der entnehmbare, die Schienen tragende Boden, welcher so leicht ist, daß er von einer Person auch hochgeklappt und an einer Seitenwand fixiert werden kann. Umrüstungskosten am LKW entfallen daher bzw. sind nur sehr gering. Der Bereich zwischen den Schienen bleibt befahrbar, so daß gewünschtenfalls auch mit Gabelstaplern be- und entladen werden kann.

Auch nach dem Entnehmen der Skates bleiben deren Einzelteile fest mit einander verbunden, beispielsweise mit Hilfe von endseitigen Verriegelungen. Eine besonders einfache Verbindung zwischen dem Träger und dem die Auflagefläche aufweisenden U-Profil kann dadurch geschaffen werden, daß der Schlauch zwischen der Innenseite der Trägerfläche und der Auflagefläche verklebt wird. Dies bewirkt einmal, daß das U-Profil und der Träger nicht längs gegeneinander verschoben werden können, zum anderen kann der Schlauch derart im Inneren der diesen aufnehmenden Kammer zwischen den Seitenflächen des Trägers nicht verwinden.

Für eine ggf. erforderliche Reparatur des Schlauches muß dieser entnommen werden können. Es wird daher vorgeschlagen, für die Verklebung des Schlauches einen permanent elastischen Kleber mit relativ geringer Klebekraft zu verwenden. Wegen der relativ großen Fläche genügt auch eine niedrige Klebekraft, um die beabsichtigte Verhinderung der Längsverschieblichkeit bzw. des Abhebens der Teile zu gewährleisten. Zur Entnahme wird der Schlauch von der Tragflächenunterseite mit Hilfe eines Werkzeuges nach unten abgelöst, danach wird der Träger abgeschoben und der Schlauch kann von der Auflagefläche abgezogen werden.

Eine besonders preisgünstige Herstellung der Skates ist dadurch gewährleistet, daß sowohl der Träger, als auch das (erste) U-Profil durch Abkanten eines Blechstreifens hergestellt werden können, wobei auch die Anschläge und die seitlichen Einziehungen an den Unterkanten der Seitenflächen des Trägers mit angeformt werden können.

Ferner wird vorgeschlagen, mindestens zwei Einzelskates mit Hilfe von Gelenkflanschplatten zu verbinden, so daß auch Unebenheiten z.B. zwischen Schienenstößen leichter überwunden werden können. Dabei liegen die Gelenkflanschplatten zweckmäßigerweise oberhalb und unterhalb der Auflagefläche des ersten U-Profils, wobei die obere Gelenkflanschplatte zweckmäßigerweise geringfügig stärker ist, als der zusammengedrückte oder evakuierte Schlauch. Ebenso wie der Schlauch, ist vorteilhaft auch die Versorgungsleitung mit der Konstruktion verklebt, wobei zwischen den gegebenenfalls zusammengefaßten Einzelskates Schlauchverbinder vorzusehen sind. Unterhalb der Auflagefläche ist die Versorgungsleitung mit einem T-Stück ausgestattet, das die Auflagefläche durchgreift und mit dem Schlauch verbunden ist, um diesen aufzublasen oder zu evakuieren.

Auf diese Weise entsteht ein hochflexibles Be- und Entladesystem zu denkbar geringen Kosten, da die Platten mit den Schienen am Ort des Bedarfs ausgelegt werden und die kompletten Skates unabhängig von den Schienen eingesetzt werden können.

Die Platte ist wie gesagt insbesondere eine Leichtbauplatte, sie besteht aus einer Ober- und einer Unterhaut, mit einer dazwischen liegenden Zellstruktur wie z.B. aus dem Flugzeugbau bekannt. Eine solche Platte ist überraschenderweise trotz des sehr geringen Gewichts stabil genug, um auch hohe auf den Schienen ruhende Lasten aufzunehmen.

Anhand der beiliegenden Figuren wird die vorliegende Erfindung durch Ausführungsbeispiele näher erläutert.

Dabei zeigen
- **Figur 1**: einen erfindungsgemäß ausgestatteten LKW;
- **Figur 2**: einen Skateboden in Draufsicht;
- **Figur 3**: dessen Stirnansicht;
- **Figur 4**: die Kopplung der Böden in Drauf- und
- **Figur 5**: in Seitenansicht sowie
- **Figur 6**: eine Leichtbauversion im Schnitt und
- **Figur 7**: diese in Draufsicht,
- **Figur 8**: einen Schnitt durch den Förderer mit aufgepumptem Schlauch,
- **Figur 9**: diesen mit entferntem Schlauch und
- **Figur 10**: einen Längsschnitt durch die letztere Figur.

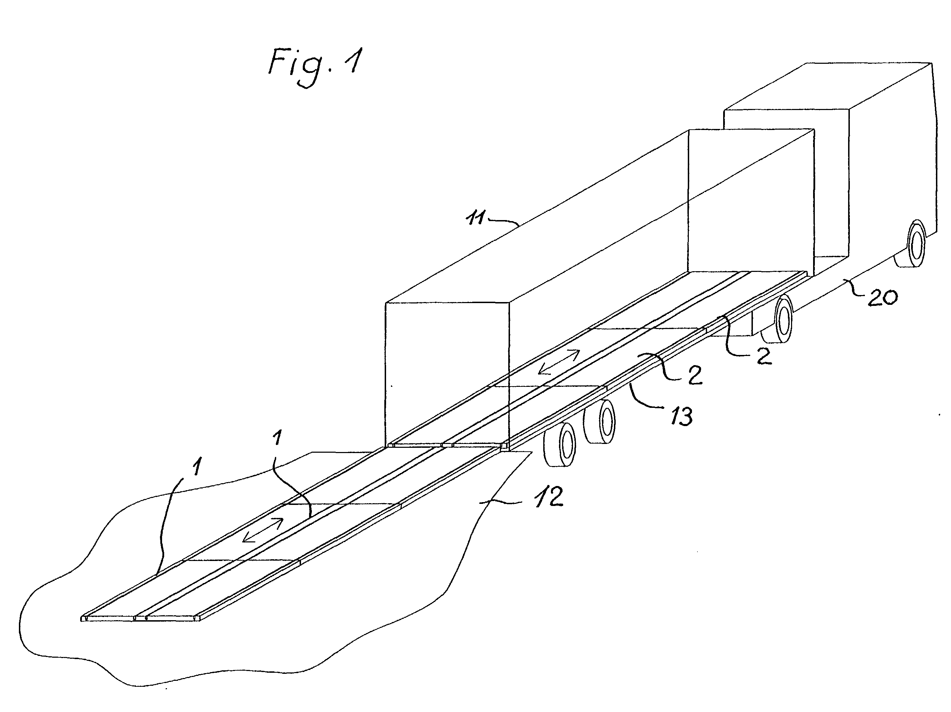

**Figur 1** zeigt ein LKW-Zugfahrzeug 20 mit Trailer 11, der rückwärtig an eine Laderampe 12 angedockt hat. Sowohl auf der Ladefläche 13 des Trailers 11 als auch auf der Laderampe 12 liegen - lose verlegt - die untereinander verbindbaren Böden 2. Die Böden 2 weisen dabei eine derartige Länge auf, daß sie einzeln bequem gehandhabt werden können.

Auf den Böden 2 sind Transporthilfen (siehe die weiteren Figuren) angeordnet, mit deren Hilfe Lasten motorisch oder von Hand oder von einer Schubkraft, beispielsweise über anliegende Lasten, bewegt werden können. Das System ist dabei modular, d.h. die Böden 2 sind beliebig austauschbar und können sowohl im Trailer 11 als auch auf der Rampe 12 oder dem Fundament der anschließenden Lagerhalle beliebig aneinander gelegt werden.

Für die Bewegung der Lasten besitzen die Böden eigene Transportmittel, hier als Schienen 1 angedeutet, in denen z.B. Skates laufen, die über Druckschläuche zum Verschieben angehoben oder zum Transport oder der Lagerung abgesenkt werden können, wobei die Skates nach dem Absenken der Last (Paletten) unter dieser z.B. für den nächsten Ladevorgang herausgezogen werden.

Zum Andrücken an der Rampe 12 können Führungen vorgesehen sein, die den Trailer 11 vertikal und horizontal justieren. In gleicher Weise können natürlich auch andere Fahrzeuge, wie z.B. Zugwaggons mit den erfindungsgemäßen Böden ausgelegt werden.

Insbesondere geeignet ist ein solches Logistiksystem im Kurzstrecken-Güterverkehr, wo kurze Be- und Entladezeiten den Transport erheblich verbilligen, und natürlich für den Langstreckentransport die Böden 2 auch sehr schnell und bequem entnommen werden oder hochgeklappt an den Seitenwänden der Trailer 11 gesichert werden können, wenn auf der Kurzstrecke die herkömmliche Beladung gewünscht ist.

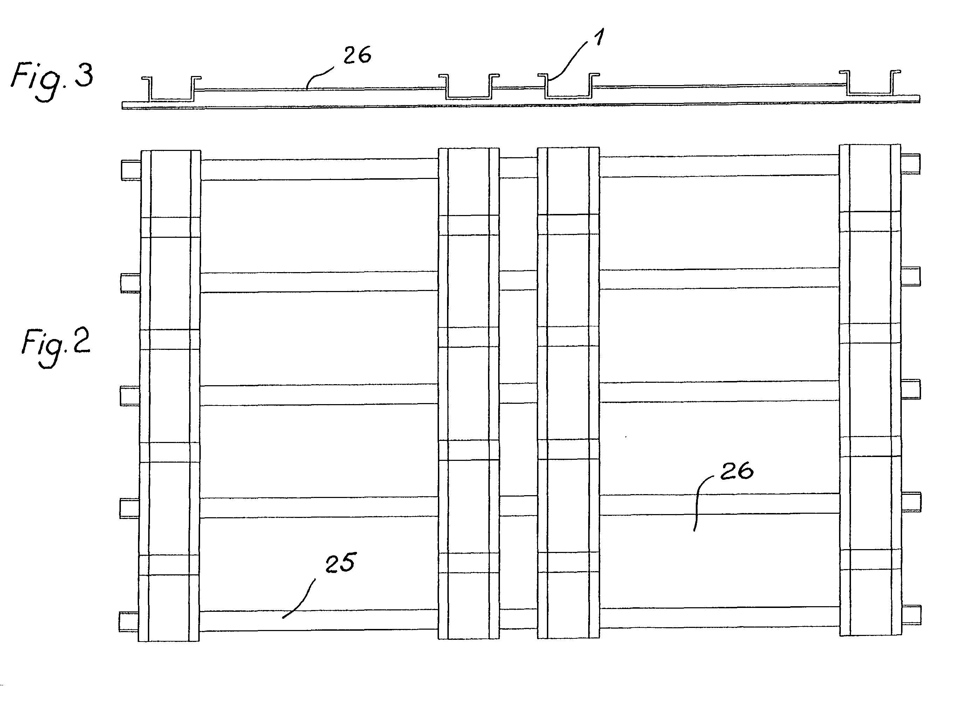

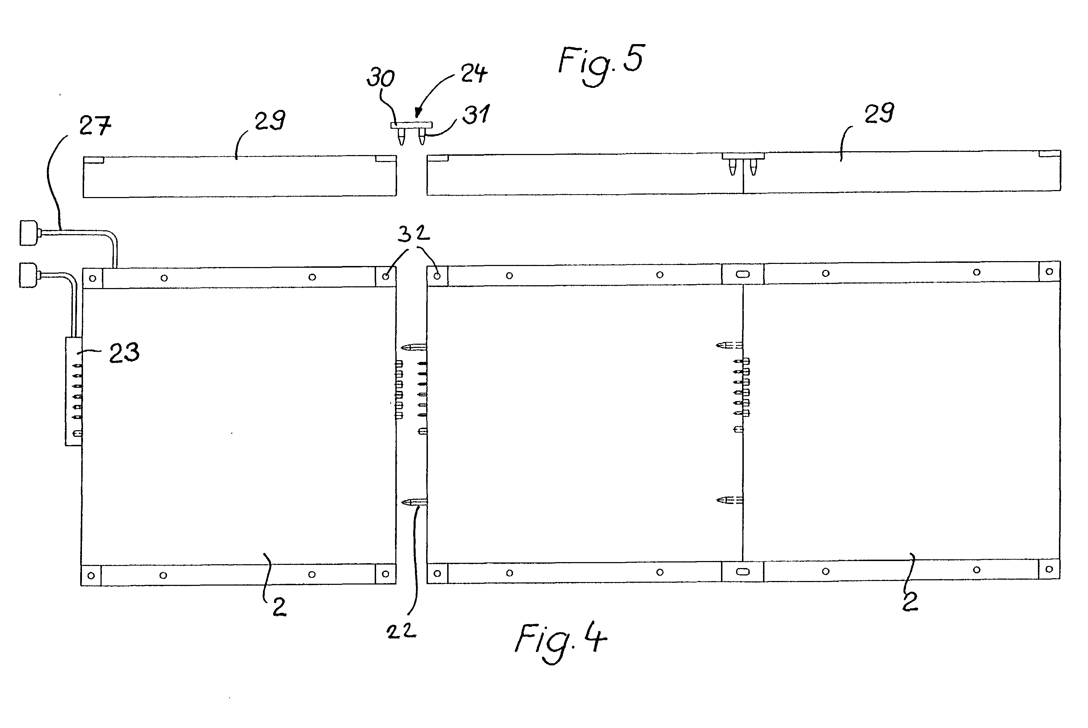

**Figuren 2** und **3** veranschaulichen eine besonders einfache Variante eines Bodens 2, bestehend aus unteren Querträgern 25 und auf diesen aufliegenden Schienen 1, wobei auf den Querträgern 25 und zwischen den Schienen 1 Abdeckbleche 26 eingefügt sind.

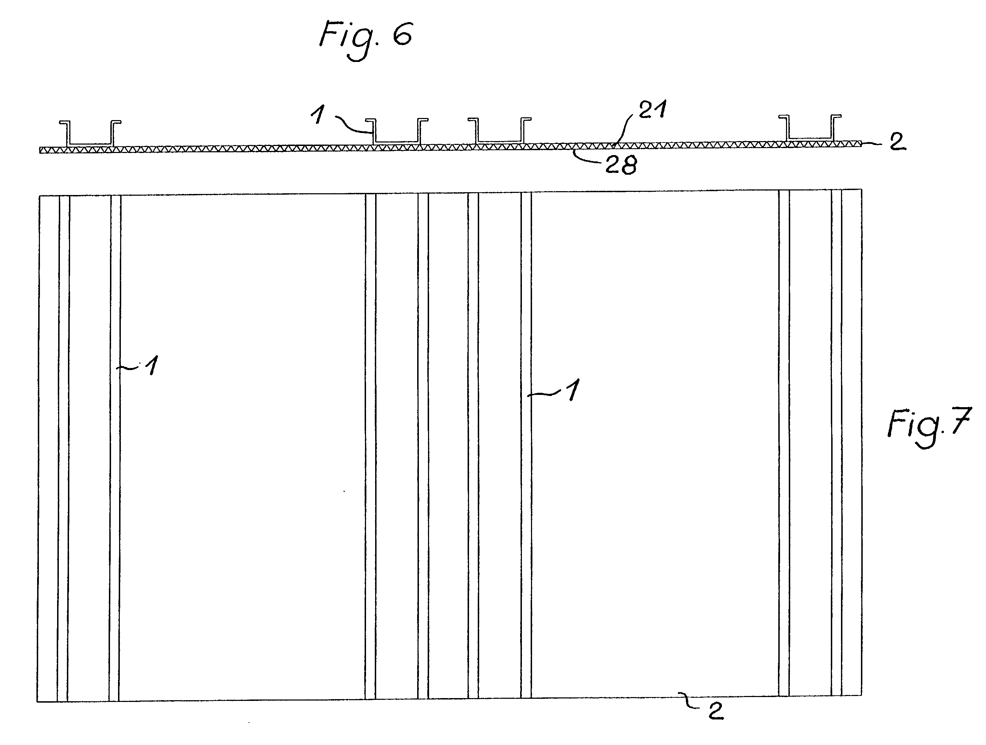

**Figuren 4** und **5** zeigen die Verbindung dreier Böden 2 mit den Justierhilfen 22, Steckkontakten 6 sowie einer Steckerleiste 23 für die Stromzufuhr. Zusätzlich ist ein seitlicher Kabelanschluß 27 gezeigt.

Weiterhin besitzen die Böden 2 Seitenleisten 29 mit senkrechten Bohrungen 32 für die Verriegelung 24. Diese ist in **Figur 5** gezeigt, sie besteht aus einer Platte 30 mit zwei Dornen 31, welche in die Bohrungen 32 der Seitenleisten 29 eingreifen und die Böden 2 aneinander gegen ein Auseinanderziehen sichern.

In den **Figuren 6** und **7** ist eine besonders bevorzugte Variante eines Bodens 2 gezeigt. Sie besteht aus einer relativ dünnen Ober- 21 und Unterhaut 28 aus Aluminium, mit angedeuteter dazwischen liegender Zellstruktur, die ein Kunststoff sein kann.

Auf die Oberhaut 21 sind die Schienen 1 als Hutprofil mit seitlichen Auflageflächen für z.B. Paletten montiert.

Dieser Boden zeichnet sich durch ein extrem geringes Gewicht bei gleichzeitig hoher Stabilität aus, er ist daher besonders gut handhabbar. Bedarfsweise können auf die erfindungsgemäßen Böden 2 Planken aufgelegt werden, um diese zu befahren.

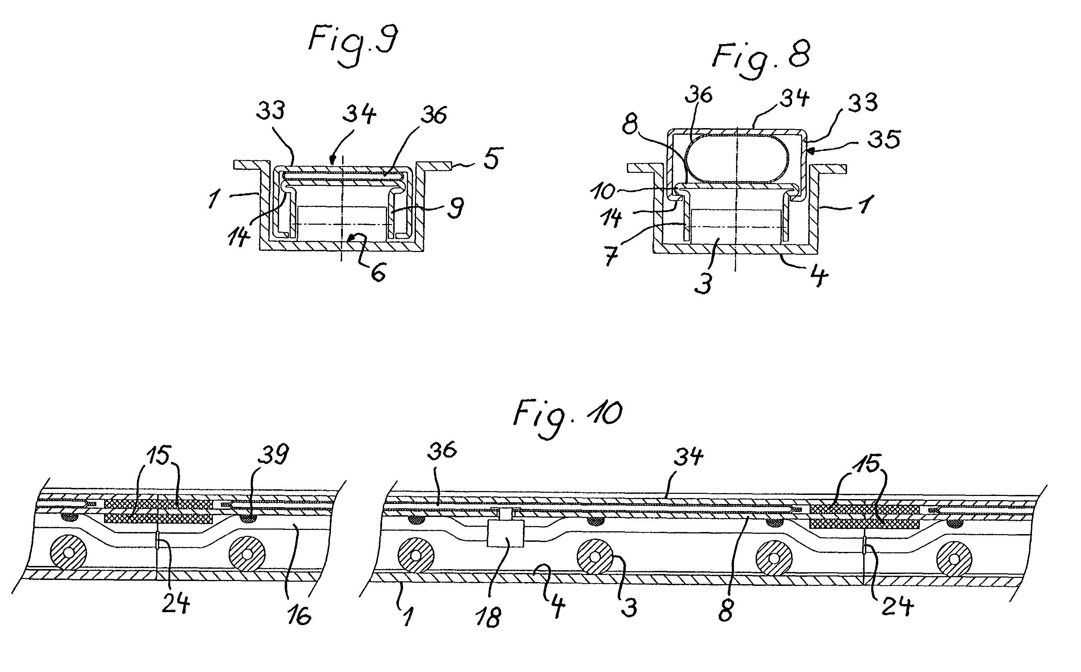

In **Figur 8** ist ein Querschnitt eines längsgestreckten Hutprofils als Schiene 1 dargestellt, diese weist obere Seitenflanken 5 sowie eine durchgehend ebene Bodenfläche 4 auf. Das Profil ist so ausgelegt, daß Lasten auf die Schiene 1 aufgelegt werden können. Gewünschtenfalls können sich unterhalb der Seitenflanken 5 Abstützungen anschließen. Diese Schienen 1 können auf dem Boden z.B. eines LKW, einer Verladerampe oder einer Halle aufgelegt werden, wobei in diesen lösbare seitliche Führungen eingefügt werden können, um diese parallel auszurichten, die Schienen können aber auch mit einer eigenen Bodenplatte verbunden sein.

In dieser Schiene 1 laufen die Skates. Sie bestehen aus einem ersten U-Profil 7 und einem zweiten, darüber angeordneten U-Profil als Träger 33. Beide U-Profile sind nach unten offen.

Das erste U-Profil 7 ist durch Biegen eines Bleches hergestellt und besitzt oben eine Auflagefläche 8 und daran angeformte Seitenschenkel 9, wobei an die Seitenflächen 35 beiderseits ein Überstand als kantenförmige Anschläge 10 angeformt ist.

Das den Träger 33 bildende obere zweite U-Profil weist oben die Tragfläche 34 auf und seitlich von diesem abgeknickte Seitenflächen 35 mit unteren nach innen gerichteten Einziehungen 14, die die Anschläge 10 untergreifen.

Zwischen der Auflagefläche 8 des ersten und der Tragfläche 34 des zweiten U-Profils liegt der aufblasbare Schlauch 36, der die Tragfläche 34 aus einem abgesenkten Zustand gegen die Anschläge 10 und somit eine aufliegende Last über das Niveau der Seitenflanken 5 der Schiene 1 anhebt.

Die Seitenschenkel 9 des ersten U-Profils 7 tragen Achsen mit Rollen 3, die auf der Bodenfläche 4 der Schiene 1 laufen, wobei die Skates über die Seitenflächen 35 in den Vertikalschenkeln der Schiene 1 sauber geführt werden.

Zwischen der Auflagefläche 8 und den Oberkanten der Rollen 3 liegt die Versorgungsleitung 16, wobei grundsätzlich zum Expandieren des Schlauches 36 auch eine Flüssigkeit dienen kann.

In **Figur 9** ist der Schlauch 36 entleert und der Träger 33 demzufolge abgesenkt, wobei die Tragfläche 34 unterhalb der Flucht zwischen den Seitenflanken 5 der Schiene 1 liegt, so daß der gesamte Skate unterhalb der auf den Flanken 5 aufliegenden Last herausgezogen werden kann. Die Seitenflächen 35 sind dabei so bemessen, daß die Einziehungen 14 nicht auf der Lauffläche 37 der Schiene 1 schleifen. Gewünschtenfalls können die Unterkanten der Seitenschenkel 9 des inneren U-Profils auch nach außen gebogen sein, um derart eine Anlage für die Einziehungen 14 zu bilden, wobei zwischen Auflagefläche 8 und Tragfläche 34 ein definierter Hohlraum verbleibt, der ein Zusammenquetschen unter Kantenbruch des Schlauches 36 verhindert.

**Figur 10** veranschaulicht einen Skate im Längsschnitt, bei entleertem Schlauch 36 zwischen der Tragfläche 34 und der Auflagefläche 8. Am Ende dieser befinden sich zwei Gelenkflanschplatten 15, über welche zwei Skates aneinandergekuppelt sind, wobei ein Skateelement z.B. eine Länge von 2 m aufweist. Unterhalb der Auflagefläche 8 ist mittig ein T-Stück 18 angeordnet, das mit dem Schlauch 36 und der Versorgungsleitung 16 z.B. für die Zu- und Abfuhr von Druckluft verbunden ist. Endseitig sind Schlauchverbinder 38 vorgesehen.

Die Versorgungsleitung ist über Klebstellen 39 mit der Unterseite der Auflagefläche 8 verbunden. Unterhalb der Schiene 1 bzw. deren Lauffläche (Bodenfläche 4) kann vorteilhaft die Leichtbauplatte oder eine andere Tragkonstruktion z.B. aus Querträgern angeordnet sein.

## Patentansprüche

1. Modular koppelbarer Ladeboden für die Logistik mit Transportmitteln, **gekennzeichnet durch** die folgenden Merkmale
a) der Boden (2) weist eine Rahmenkonstruktion auf, in welcher
b) paarweise Schienen (1) angeordnet sind, in denen Skates auf Rollen (3), als Träger einer Last laufen, wobei
c) mehrere Böden zu einer Transportstrecke zusammenschließbar sind,
d) die Böden endseitige Verriegelungen besitzen und
e) die Schienen (1) ein Hutprofil mit nach außen gerichteten Seitenflanken (5) und einer Bodenfläche (4) aufweisen;
f) die Skates bestehen aus einem ersten nach unten offenen U-Profil (7) mit einer Auflagefläche (8), sowie Seitenschenkeln (9), zwischen denen die Rollen (3) gelagert sind;
g) an die Seitenschenkel (9) sind nach außen weisende Anschläge (10) angeformt;
h) auf der Auflagefläche (8) ruht ein aufblasbarer Schlauch (36),
i) die Skates bestehen darüberhinaus aus einem zweiten nach unten offenen U-Profil (33), das über dem ersten U-profil (7) angeordnet ist, und eine Tragfläche (34) aufweist, wobei
l) der Schlauch (36) mit der Tragfläche (34) und der Auflagefläche (8) verbunden ist.

2. Ladeboden nach Anspruch 1, **dadurch gekennzeichnet, daß** die Verbindung eine Klebeverbindung ist.

3. Ladeboden nach Anspruch 1 oder 2, **dadurch gekennzeichnet, daß** der Träger (33) und das erste U-Profil durch Abkanten hergestellt sind, wobei die Anschläge (10) und die Einziehungen (14) durch Einbiegen mit eingeformt sind.

4. Ladeboden nach Anspruch 1 bis 3, **dadurch gekennzeichnet, daß** mindestens zwei Skates mit Hilfe von oberhalb und/oder unterhalb der Auflagefläche (8) des ersten U-Profils angeordneten Gelenkflanschplatten (15) mit einander verbunden sind.

5. Ladeboden nach einem oder mehreren der Ansprüche 1 bis 4, **dadurch gekennzeichnet, daß** die Versorgungsleitung (16) für die Zufuhr von Preßluft an den Schlauch (36) unterhalb der Auflagefläche (8) und über den Achsen (17) der Rollen (3) verlegt ist.

6. Ladeboden nach Anspruch 5, **dadurch gekennzeichnet, daß** die Versorgungsleitung (16) mit der Auflagefläche (8) verklebt ist, wobei dieser T-Stücke (18) mit Abzweigungen (19) aufweist, die die Auflagefläche (8) durchgreifen und mit dem Schlauch (36) verbunden sind.

7. Ladeboden nach Anspruch 1 - 6, **dadurch gekennzeichnet, daß** die Bodenplatte (30) eine Leichtbauplatte aus Aluminium ist, die eine Oberhaut (21) und eine Unterhaut (28), sowie eine dazwischen liegende Zellstruktur aufweist.

8. Ladeboden nach Anspruch 1 - 7, **dadurch gekennzeichnet, daß** auf die Bodenplatte (30) zwischen die Schienen (1) Laufplanken auflegbar sind.

9. Ladeboden nach Anspruch 1 - 8, **dadurch gekennzeichnet, daß** die Böden (2) je endseitige miteinander fluchtende Führungszapfen und Aufnahmen besitzen.

10. Ladeboden nach Anspruch 1 - 9, **dadurch gekennzeichnet, daß** die Böden (2) mit jeweils ineinandergreifenden endseitigen Steckkontakten (6) für eine Stromversorgung versehen sind.

11. Ladeboden nach den Ansprüchen 1 - 10, **dadurch gekennzeichnet, daß** die Böden (2) Druckluftanschlüsse und Druckluftleitungen aufweisen.

12. Ladeboden nach den Ansprüchen 1 - 11, **dadurch gekennzeichnet, daß** diese zusätzlich seitlich angeordnete Steckkontakte (6) für die Stromversorgung aufweisen.

13. Ladeboden nach den Ansprüchen 1 - 12, **dadurch gekennzeichnet, daß** der Boden (2) Halterungen für die Befestigung an LKW-Fahrzeugaufbauten aufweist.

14. Ladeboden nach den Ansprüchen 1 - 13, **dadurch gekennzeichnet, daß** die Böden (2) neigbar sind.

## Claims

1. Modular-coupling load floor for logistics by transport means, **characterized by** the following elements:
a) The floor (2) comprises a frame structure, in which
b) pairs of rails (1) are arranged, on which skates, as the carriers of a load, are running on rollers (3), wherein
c) several floors can be combined to form a transport track,
d) the floors are provided with end-sided locking mechanisms, and
e) the rails (1) comprise a top-hat section with lateral sides (5) that are directed to the outside and the rails further comprise a floor area (4);
f) the skates comprise a first U-section (7) that is open towards the bottom and is provided with a support area (8) and the skates further comprise lateral legs (9) with the rollers (3) mounted therebetween;
g) projections (10) pointing in an outward direction are formed to fit to the lateral legs (9);
h) an inflatable tube (36) rests on the support area (8);
i) the skates furthermore comprise a second U-section (33) that is open towards the bottom, is arranged above the first U-section (7) and comprises a bearing area (34), wherein
j) the tube (36) is connected to the bearing area (34) and the support area (8).

2. Load floor according to Claim 1, **characterized in that** the connection is a bonded connection.

3. Load floor according to Claim 1 or 2, **characterized in that** the carrier (33) and the first U-section are made by folding, with the projections (10) and the neckings (14) being, at the same time, formed by bending in.

4. Load floor according to Claim 1 to 3, **characterized in that** at least two skates are connected to each other by means of hinged flange plates (15) that are arranged above and/or below the support area (8) of the first U-section.

5. Load floor according to one or more of Claims 1 to 4, **characterized in that** the supply line (16) provided for supplying compressed air to the tube (36) is placed below the support area (8) and above the axles (17) of the rollers (3).

6. Load floor according to Claim 5, **characterized in that** the supply line (16) is bonded to the support area (8), wherein the load floor comprises T-pieces (18) with branches (19) that reach through the support area (8) and are connected to the tube (36).

7. Load floor according to anyone of Claims 1 to 6, **characterized in that** the floor plate (30) is a light-weight building board made of aluminium, that comprises an upper skin (21) and a lower skin (28) as well as a cell structure placed therebetween.

8. Load floor according to anyone of Claims 1 to 7, **characterized in that** running planks can be placed onto the floor plate (30) and between the rails.

9. Load floor according to anyone of Claims 1 to 8, **characterized in that** the floors (2) each comprise end-sided guides and receptacles that are aligned with each other.

10. Load floor according to anyone of Claims 1 to 9, **characterized in that** the floors (2) are each provided with end-sided plug contacts (6) that are engaging each other and are intended for power supply.

11. Load floor according to anyone of Claims 1 to 10, **characterized in that** the floors (2) comprise compressed-air connections and compressed-air lines.

12. Load floor according to anyone of Claims 1 to 11, **characterized in that** the load floors comprise additional plug contacts (6) that are arranged laterally and are intended for power supply.

13. Load floor according to anyone of Claims 1 to 12, **characterized in that** the floor (2) comprises holders for the attachment of lorry bodies.

14. Load floor according to anyone of Claims 1 to 13, **characterized in that** the floors (2) can be tilted.

## Revendications

1. Plateau de chargement ancrable modulaire pour la logistique, comprenant des moyens de transport, **caractérisé par** les caractéristiques suivantes:
a) le plateau (2) présente une construction de cadre dans laquelle
b) sont disposés par paires des rails (1) dans lesquels des patins à roulettes (3) se déplacent en tant qu'éléments porteurs d'une charge,
c) plusieurs plateaux pouvant être mis en commun pour constituer une voie de transport,
d) les plateaux possédant des dispositifs de blocage en leurs extrémités et
e) les rails (1) présentant un profil en forme de chapeau avec des rebords (5) dirigés vers l'extérieur et un fond (4);
f) les patins sont composés d'un premier profilé en U (7) ouvert vers le bas avec une surface d'appui (8) ainsi que de branches latérales (9) entre lesquelles sont logées les roulettes (3);
g) des butées (10) tournées vers l'extérieur sont réalisées d'une seule pièce avec les branches latérales (9);
h) un tuyau flexible gonflable (36) repose sur la surface d'appui (8);
i) les patins sont composés, en outre, d'un deuxième profilé en U (33) ouvert vers le bas, lequel est placé sur le premier profilé en U (7) et présente une surface portante (34),
j) le tuyau flexible (36) étant assemblé avec la surface portante (34) et la surface d'appui (8).

2. Plateau de chargement selon la revendication 1, **caractérisé en ce que** l'assemblage est un assemblage par collage.

3. Plateau de chargement selon la revendication 1 ou 2, **caractérisé en ce que** le support (33) et le premier profilé en U sont réalisés par pliage, les butées (10) et les parties rentrantes (14) étant réalisées d'une seule pièce avec eux par repliement vers l'intérieur.

4. Plateau de chargement selon la revendication 1 à 3, **caractérisé en ce qu'**au moins deux patins sont assemblés entre eux à l'aide de flasques articulés (15) disposés au-dessus et/ou en dessous de la surface d'appui (8) du premier profilé en U.

5. Plateau de chargement selon l'une ou plusieurs des revendications 1 à 4, **caractérisé en ce que** la conduite d'alimentation (16) pour amener de l'air comprimé au tuyau flexible (36) est posée en dessous de la surface d'appui (8) et au-dessus des axes (17) des roues (3).

6. Plateau de chargement selon la revendication 5, **caractérisé en ce que** la conduite d'alimentation (16) est collée avec la surface d'appui (8), ladite conduite d'alimentation (16) présentant des pièces en T (18) avec des branches (19) qui traversent ladite surface d'appui (8) et sont assemblées avec le tuyau flexible (36).

7. Plateau de chargement selon la revendication 1 à 6, **caractérisé en ce que** la plaque (30) servant de plateau est une plaque légère en aluminium présentant une pellicule supérieure (21) et une pellicule inférieure (28) ainsi qu'une structure cellulaire intercalée.

8. Plateau de chargement selon la revendication 1 à 7, **caractérisé en ce que** des planches praticables peuvent être posées sur la plaque (30) servant de plateau entre les rails (1).

9. Plateau de chargement selon la revendication 1 à 8, **caractérisé en ce que** les plateaux (2) possèdent chacun, en leurs extrémités, des tourillons de guidage et des logements alignés.

10. Plateau de chargement selon la revendication 1 à 9, **caractérisé en ce que** les plateaux (2) sont pourvus, en leurs extrémités, de contacts à fiches (6) qui s'engagent respectivement les uns dans les autres pour assurer une alimentation en courant.

11. Plateau de chargement selon les revendications 1 à 10, **caractérisé en ce que** les plateaux (2) présentent des raccordements pour l'air comprimé et des conduites d'air comprimé.

12. Plateau de chargement selon les revendications 1 à 11, **caractérisé en ce que** ceux-ci présentent additionnellement des contacts à fiches (6) situés latéralement pour assurer l'alimentation en courant.

13. Plateau de chargement selon les revendications 1 à 12, **caractérisé en ce que** le plateau (2) présente des attaches pour fixation aux superstructures d'un poids lourd.

14. Plateau de chargement selon les revendications 1 à 13, **caractérisé en ce que** les plateaux (2) sont inclinables.
